# EUROPÄISCHE PATENTSCHRIFT

(11) **EP 0 369 287 B1**
(45) Veröffentlichungstag und Bekanntmachung des Hinweises auf die Patenterteilung: **22.05.1996**
(21) Anmeldenummer: 89120554.4
(22) Anmeldetag: 07.11.1989
(51) Int. Cl.: C08F 10/02, C08F 2/00, C08F 8/14

(54) **Verfahren zur Herstellung von Ethylenpolymerisaten mit vermindertem Geruch**
Process for the manufacture of odourless ethylene copolymers
Procédé de préparation de copolymères d'éthylène inodores

(30) Priorität: 12.11.1988 DE 3838491
(43) Veröffentlichungstag der Anmeldung: 23.05.1990
(73) Patentinhaber: BASF Aktiengesellschaft, D-67063 Ludwigshafen (DE)
(72) Erfinder: Saive, Roland, Dr., D-6700 Ludwigshafen (DE); Funk, Guido, Dr., D-6520 Worms 1 (DE); Schmidt-Thuemmes, Juergen, Dr., D-6708 Neuhofen (DE); Konrad, Rainer, Dr., D-6701 Goennheim (DE); Bauer, Peter, D-6700 Ludwigshafen (DE)

(56) Entgegenhaltungen:
- FR-A- 2 132 780
- FR-A- 2 207 939
- US-A- 4 214 063

## Beschreibung

Die Erfindung betrifft ein Verfahren zur Herstellung von Ethylenpolymerisaten durch Polymerisation der Monomeren in einer Polymerisationszone bei Drücken von 5 bis 60 bar und Temperaturen bis maximal 120°C in einer gerührten oder gewirbelten Trockenphase oder in niedrigsiedenden Kohlenwasserstoffen als Suspensionsmittel in Gegenwart eines Ziegler-Katalysatorsystems, bevorzugt bestehend aus einer Vanadin-, Organoaluminium- und einer Organohalogen-Katalysatorkomponente, Abtrennen der entstandenen festen Ethylenpolymerisate von nichtumgesetzten Monomeren und ggf. Suspensionsmittel nach Druckverminderung in einer Entspannungszone, Entfernen der Restanteile an Monomeren und ggf. Suspensionsmittel in einer Entgasungszone durch Einleiten eines Inertgasstroms und überführen des festen Ethylenpolymerisats in eine Aufschmelzzone.

Die Entfernung von nicht einpolymerisierten Monomeren und anderen Begleitstoffen aus Ethylenhomo- oder -copolymerisaten ist erforderlich, da die Monomeren die Produktqualität durch ihren Eigengeruch mindern. Die Reinigung der Ethylenpolymerisate von anhaftenden Monomeren, Geruchsstoffen bzw. von Suspensions- oder Lösungsmitteln ist seit längerem bekannt. So kann zur Entfernung der flüchtigen Kohlenwasserstoffe ein Inertgasstrom, z.B. aus Kohlendioxid oder Stickstoff, verwendet werden (vgl. US-A-3 152 872, US-A-4 258 158, US-A-4 372 758, US-A-4 372 758, EP-B1-0 127 253), das Endprodukt kann mit flüssigem Olefin gewaschen werden (vgl. US-A-4 214 063) oder es kann das Entgasen des Polyolefinpulvers mit gesättigten aliphatischen Kohlenwasserstoffen vorgenommen werden (vgl. Chemical Abstracts 103, 1985, 54 599 r).

In den deutschen Patentanmeldungen DE-A-37 35 937 und DE-A-38 15 487 sind Verfahren zur Entfernung von Suspensionsmittel und von nichtumgesetzten Monomeren vorgeschlagen, wobei die Begleitstoffe in einer Entgasungszone, die auch als Trocknungszone bezeichnet wird, durch Einleiten eines Inertgasstroms entfernt werden oder wobei zunächst mit Ethylen vorgespült und anschliepend mit einem Gemisch aus Stickstoff und Wasserdampf nachgespült wird.

FR-A-2 207 939 schlägt die Behandlung von Polyolefinen mit C₂ bis C₆ - Alkenoxyden zur Verminderung des Halogengehaltes vor.

Aufgabe der vorliegenden Erfindung war es, ein Verfahren zur Herstellung von Ethylenpolymerisaten mittels Ziegler-Katalysatorsystem, bevorzugt eines Vanadin enthaltenden Katalysatorsystems, zur Verfügung zu stellen, bei dem das resultierende Ethylenpolymerisat keinen Geruch mehr aufweist.

Diese Aufgabe wurde durch ein Verfahren der oben angegebenen Art gelöst, wobei erfindungsgemäß das Ethylenpolymerisat in einer Aufschmelzzone, bevorzugt in einem Extruder, bei 170 bis 280°C, mit Zusätzen, bevorzugt in Mengen von 0,02 bis 2 Gew.%, die durch Veresterung Säuren binden können, bevorzugt mit organischen Epoxidverbindungen, umgesetzt wird.

Verfahren der eingangs angegebenen Art sind bekannt und werden industriell ausgeübt, so daß sich eine ausführlichere Beschreibung derselben erübrigt (vgl. z.B. Ullmanns Encyklopädie der technischen Chemie, 4. Auflage, 1980, Band 19, Seiten 178 bis 186 oder Encyclopedia of Polymer Science and Engineering, 2. Auflage, 1986, Band 6, Seiten 436 bis 438). Unter Ethylenpolymerisaten werden hierbei die Homopolymerisate des Ethylens sowie die Copolymerisate aus überwiegender Menge von Ethylen mit anderen α-Olefinen verstanden. Derartige Ethylenpolymerisate werden vorzugsweise mit Hilfe eines Ziegler-Katalysatorsystems hergestellt, das aus einer Vanadin-, einer Organoaluminium- und einer Organohalogen-Katalysatorkomponente besteht.

Die beim Verfahren einzusetzenden Stoffe sind die üblichen. Dies gilt für die Monomeren, wie insbesondere Ethylen und für die Comonomeren wie Propylen, Buten-1, Hexen-1, 4-Methylpenten-1 oder Octen-1 sowie für die ggf. vorhandenen niedrig siedenden Kohlenwasserstoffe - bevorzugt gesättigte C₃- bis C₈-Kohlenwasserstoffe - als Suspensionsmittel. Der Gehalt der im Ethylenpolymerisat gegebenenfalls einpolymerisierten Comonomeren liegt bevorzugt zwischen 1 und 20 Gew.%. üblich sind auch die verwendeten Katalysatorensysteme, sie sind vom Zieglertyp, wobei der Vanadin enthaltende Katalysatortyp, der Gegenstand der EP-A 166 888 ist, bevorzugt ist. Gleiches gilt auch für das zum Nachspülen der festen Phase dienende Inertgas.

Das Abtrennen des Gemischs aus festem Ethylenpolymerisat und nicht umgesetzten gasförmigen Monomeren und ggf. Suspensionsmittel erfolgt vorzugsweise durch kontinuierliches Austragen des Gemischs in eine Entspannungszone, die als übliches Entspannungsgefäß ausgebildet ist, und in der ein Druck von 0,1 bis 3 bar, insbesondere vor ca. 1,2 bar sowie eine Temperatur von 40 bis 120°C herrscht, so dap sich eine gasförmige Phase ausbilden kann, die im wesentlichen aus Monomeren und ggf. Suspensionsmittel besteht, und eine feste Phase, die im wesentlichen aus Ethylenpolymerisat und 0,1 bis 8 Gew.%, bezogen auf das Gewicht des Polymerisats, aus anhaftenden Monomeren und ggf. Suspensionsmittel besteht. Es ist üblich, die aus dem Polymerisat abgetrennten Monomeren in die Polymerisationszone zurückzuführen. Ergänzend wird hierzu noch auf die eingangs zitierte Literatur sowie insbesondere auf die EP-A-0 174 620 hingewiesen.

Nach bekannten Verfahren wird aus der Entgasungszone festes Ethylenpolymerisat ausgetragen und in eine Schmelzzone, die üblicherweise einen Extruder darstellt, gefördert.

Die nach dem eingangs angegebenen Verfahren erhaltenen Ethylenpolymerisate weisen bevorzugt Dichten im Bereich von 0,940 bis 0,960 g/cm³ und Schmelzindexwerte von 1 bis 300 g/10 min. auf. Von der Entspannungszone aus gelangt der Polymerisatgrieß, der noch Restanteile Monomer und ggf. Suspensionsmittel enthält, in eine Entgasungszone, auch als Trocknungszone bezeichnet, in der bevorzugt ein Druck von 1 bis 1,2 bar herrscht. In der Entgasungszone ist gewöhnlich eine Temperatur zwischen 65 und 80°C eingestellt, die Trocknung selbst kann z.B. in Wendeltrocknern in einem Strom aus Inertgas vorgenommen werden. Als Inertgas ist Stickstoff oder Kohlendioxid besonders geeignet. (vgl. die deutsche Patentanmeldung P 37 35 937.1)

Nach dem erfindungsgemäßen Verfahren soll das Ethylenpolymerisat in der Schmelze, bevorzugt in einem Extruder, bei 170 bis 280°C epoxidierten Sojabohnenöl umgesetzt werden. Das Sojabohnenöl wird bevorzugt in einer Menge von 0,02 bis 2 Gew.-% der Ethylenpolymerisatmenge zugegeben. Das Sojabohnenöl kam dem Polymerisat entweder in einer separaten Mischzone, wobei man die in der Technik bekannten Mischer verwenden kann, beigemischt werden, oder es wird in die Aufschmelzzone eines Extruders eingebracht und direkt umgesetzt.

Es ist ein Vorteil des erfindungsgemäßen Verfahrens, daß Ethylenpolymerisate nach dem Ziegler-Polymerisationsverfahren erhalten werden, deren Geruch in einem Test unter Berücksichtigung von DIN 10 955 deutlich besser beurteilt wird.

### Beispiel

### A) Copolymerisation von Ethen und Buten-(1)

Sie erfolgt kontinuierlich in einem üblichen Schleifenreaktor des Typs, wie er in der US-A 32 42 150 beschrieben ist; das Kreisrohr des Reaktors hatte eine Länge von 11,4 m und einen inneren Durchmesser von 0,15 m.

Im einzelnen wurde dabei im kontinuierlich-stationären Betrieb wie folgt gearbeitet:
a) Als Reaktionsmedium wurde iso-Butan eingesetzt.
b) Die Menge an monomerem Ethylen im Reaktionsgemisch wurde konstant auf 25 Vol.% gehalten.
c) Die Menge an monomerem Buten-(1) im Reaktionsgemisch wurde konstant auf 4 Vol.% gehalten.
d) Die Menge an Wasserstoff im Reaktionsgemisch wurde konstant auf 0, 15 Vol.% gehalten.
e) Es wurde eingesetzt ein Ziegler-Katalysatorsystem, wie es Gegenstand der EP-A 166 888 ist, nämlich aus
   (1) einer Übergangsmetall-Katalysatorkomponente, wie sie am Schluß dieses Beispiels beschrieben ist,
   (2) Aluminiumtriisobutyl sowie
   (3) Trichlormonofluormethan
   mit den Maßgaben, daß das Atomverhältnis Übergangsmetall aus der Katalysatorkomponente (1) : Aluminium aus der Katalysatorkomponente (2) 1 : 5,63 und das Molverhältnis Katalysatorkomponente (2) : Katalysatorkomponente (3) 1 : 0,11 -jeweils konstant - betrugen.
   Bezugsgröße für die Absolutmengen dieser Katalysatorkomponenten war eine - konstant gehaltene - Konzentration des Aluminiumtriisobutyls im Reaktionsgemisch von 135 mg/kg iso-Butan.
f) Es wurde bei einer Temperatur von 80°C copolymerisiert, entsprechend einem Gesamtdruck des Reaktionsgemisches von etwa 40 bar.
g) Das Reaktionsgemisch wurde als Kreisstrom mit einer Geschwindigkeit von 8 m/s geführt.
h) Die mittlere Konzentration Cₘ an Polymerisat im Kreisstrom wurde konstant auf 0,54 g Polymerisat pro g Reaktionsgemisch gehalten.
i) Das gebildete Polymerisat wurde dem Reaktor durch Ausschleusen von Reaktionsgemisch entzogen in der Mitte des untersten Abschnitts des Kreisrohrs auf dessen oberster Innenseite; - hier hatte die Konzentration an Polymerisat einen Wert von 0,59 · Cₘ entsprechend 0,32 g Polymerisat pro g Reaktionsgemisch.

Auf diese Weise wurden 19,5 kg Copolymerisat pro Stunde gewonnen; es besaß einen Schmelzindex (nach DIN 53 735 von 190°C/21,6 kg) von 165 g/10 min., eine Dichte (nach DIN 53 479) von 0,949 g/cm³, einen mittleren Teilchendurchmesser (nach DIN 53 477) von 0,95 mm sowie eine Schüttdichte (nach DIN 53 468) von 495 g/cm³.

### B) Herstellung der zur oben dargelegten Polymerisation eingesetzten Übergangsmetall-Katalysatorkomponente (1)

### Stufe(1.1)

Es wurde ausgegangen von 25 Gewichtsteilen Siliciumdioxid (SiO₂ Teilchendurchmesser: 20-60 µm, Porenvolumen; 1,75 cm³/g, Oberfläche : 340 m/g) sowie einer Lösung aus 100 Gewichtsteilen Tetrahydrofuran und 12,5 Gewichtsteilen einer Übergangsmetall-Komposition, bestehend aus 100 Molteilen eines Vanadiumtrihalogenid-Alkohol-Komplexes der Formel VCl₃ · 4 ZOH, worin Z steht für einen iso-Propylrest, 1,3 Molteilen eines Titantrihalogenids der Formel TiCl₃ · 1/3 AlCl₃, sowie 6,7 Molteilen Zirkontetrachlorid. Diese zwei Komponenten wurden vereinigt und die dabei erhaltene Suspension kurz gerührt. Anschließend wurde das gebildete festphasige Zwischenprodukt isoliert durch Abtreiben der flüchtigen Bestandteile in einem Rotationsverdampfer, der bis zu einem Betriebsdruck von 10 mbar und einer Betriebstemperatur von 70°C gebracht wurde.

### Stufe (1.2)

20 Gewichtsteile des in Stufe (1.1) gewonnenen festphasigen Zwischenprodukts wurden in 160 Gewichtsteilen n-Heptan suspendiert, worauf diese Suspension mit einer Lösung aus 8 Gewichtsteilen Diethylaluminiumchlorid in 20 Gewichtsteilen n-Heptan versetzt und die daraus resultierende Suspension kurz bei 65°C gerührt wurde. Anschließend wurde filtriert, dreimal mit n-Heptan gewaschen und im Vakuum getrocknet. Die Analyse des erhaltenen festphasigen Produktes - d.h. der Katalysatorkomponente (1) - ergab einen Gehalt an Übergangsmetallen von 0,00156 Mol/g.

### C) Umsetzung des erhaltenen Copolymerisats mit einer Epoxidverbindung

Das unter A) erhaltene Copolymerisat wurde durch Reduzierung des Drucks auf 1 bar von der Hauptmenge des Suspensionsmittels und der flüchtigen Einsatzstoffe befreit. Weiterhin wurden Reste flüchtiger Bestandteile durch Spülen mit einem Stickstoffstrom entfernt. Das so erhaltene feinteilige Copolymerisat wurde in einem Mischbehälter mit 2000 ppm Ca-Stearat, 1000 ppm Irganox® 1076 (ein sterisch gehindertes phenolisches Antioxidans der Fa. Ciba Geigy) und 200 ppm Edenol® D 81 (ein epoxidiertes Sojaöl der Fa. Henkel) vermischt und in einem Einschneckenextruder (Durchmesser 20 mm, Länge 20 D, Ausstoß 1 kg/h) aufgeschmolzen und zu Granulat verarbeitet.

### Vergleichsbeispiel

Es wurde wie im erfindungsgemäßen Beispiel verfahren, jedoch ohne Verwendung von epoxidiertem Sojaöl unter C).

Das Produkt, das im erfindunsgemäßen Beispiel erhalten wurde, ergab in einem Geruchstest unter Berücksichtigung von DIN 10955 eine um 1,5 Einheiten bessere Geruchsnote als das Produkt des Vergleichsbeispiels.

## Patentansprüche

1. Verfahren zur Herstellung von Ethylenpolymerisaten durch Polymerisation der Monomeren in einer Polymerisationszone bei Drücken von 5 bis 60 bar und Temperaturen bis maximal 120°C in einer gerührten oder gewirbelten Trockenphase oder in niedrigsiedenden Kohlenwasserstoffen als Suspensionsmittel in Gegenwart eines Ziegler-Katalysatorsystems, Abtrennen der entstandenen festen Ethylenpolymerisate von nichtumgesetzten Monomeren und ggf. Suspensionsmittel nach Druckverminderung in einer Entspannungszone, Entfernen der Restanteile an Monomeren und ggf. Suspensionsmittel in einer Entgasungszone durch Einleiten eines Inertgasstroms und Überführen des festen Ethylenpolymerisats in eine Aufschmelzzone, dadurch gekennzeichnet, daß das Ethylenpolymerisat in der Aufschmelzzone mit epoxidiertem Sojabohnenöl umgesetzt wird.

2. Verfahren nach Anspruch 1, dadurch gekennzeichnet, daß man das Aufschmelzen des Ethylenpolymerisats in einem Extruder bei 170 bis 280°C vornimmt.

3. Verfahren nach Anspruch 1 oder 2, dadurch gekennzeichnet, daß die Menge des epoxidierten Sojabohnenöls 0,02 bis 2 Gew.-% des Ethylenpolymerisats beträgt.

4. Verfahren nach den Ansprüchen 1 bis 3, dadurch gekennzeichnet, daß das Ziegler-Katalysatorsystem aus einer Vanadin-, einer Organoaluminium- und einer Organohalogen-Katalysatorkomponente besteht.

## Claims

1. A process for the preparation of an ethylene polymer by polymerizing the monomers in a polymerization zone under from 5 to 60 bar and at not more than 120°C in a stirred or fluidized dry phase or in a low boiling hydrocarbon as a suspending agent in the presence of a Ziegler catalyst system, isolating the resulting solid ethylene polymer from unconverted monomers and any suspending agent after reducing the pressure in a let-down zone, removing the residual amounts of monomers and any suspending agent in a devolatilization zone by passing in an inert gas stream and transferring the solid ethylene polymer to a melting zone, wherein the ethylene polymer is reacted, in the melting zone, with epoxidized soybean oil.

2. A process as claimed in claim 1, wherein the ethylene polymer is melted in an extruder at from 170 to 280°C.

3. A process as claimed in claim 1 or 2, wherein the amount of the epoxidized soybean oil is from 0.02 to 2% by weight of the ethylene polymer.

4. A process as claimed in any of claims 1 to 3, wherein the Ziegler catalyst system consists of a vanadium catalyst component, an organoaluminum catalyst component and an organohalogen catalyst component.

## Revendications

1. Procédé de préparation de polymères d'éthylène par polymérisation des monomères dans une zone de polymérisation, sous des pressions de 5 à 60 bar et à des températures de 120°C au maximum, dans une phase sèche agitée ou fluidisée ou dans des hydrocarbures de bas point d'ébullition servant de milieu de suspension, et en présence d'un système catalytique de Ziegler, séparation des polymères d'éthylène solides formés d'avec les monomères n'ayant pas réagi et éventuellement le milieu de suspension après abaissement de la pression dans une zone de détente, élimination des restes de monomères et éventuellement de milieu de suspension dans une zone de dégazage par passage d'un courant de gaz inerte, et transfert du polymère d'éthylène solide dans une zone de fusion, caractérisé en ce que le polymère d'éthylène est mis en réaction, dans la zone de fusion, avec de l'huile de soja époxydée.

2. Procédé selon la revendication 1, caractérisé en ce que l'on procède à la fusion du polymère d'éhylène dans une extrudeuse à une température de 170 à 280°C.

3. Procédé selon la revendication 1 ou 2, caractérisé en ce que la quantité de l'huile de soja époxydée se situe entre 0,02 et 2% en poids du polymère d'éthylène.

4. Procédé selon l'une quelconque des revendications 1 à 3, caractérisé en ce que le système catalytique de Ziegler est constitué par un composant de catalyseur au vanadium, un composant de catalyseur organoaluminique et un composant de catalyseur organohalogéné.
